# FASCICULE DE BREVET EUROPEEN

(11) **EP 0 667 694 B1**
(45) Date de publication et mention de la délivrance du brevet: **10.01.1996**
(21) Numéro de dépôt: 94400324.3
(22) Date de dépôt: 14.02.1994
(51) Int. Cl.: H04L 12/26

(54) **Procédé de mesure de paramètres de performance d'un réseau ATM et dispositif de mise en oeuvre**
Verfahren und Vorrichtung zum Messen von Leistungskennwerten eines ATM-Netzes
Method and device to measure the performance parameters of a ATM network

(30) Priorité: 16.12.1993 FR 9301736
(43) Date de publication de la demande: 16.08.1995
(73) Titulaire: FRANCE TELECOM, F-75015 Paris (FR)
(72) Inventeur: Tremel, Jean-Yves, Cabinet Ballot-Schmidt, F-75116 Paris (FR); Garandel, René, Cabinet Ballot-Schmidt, F-75116 Paris (FR); Jan, Yves, Cabinet Ballot-Schmidt, F-75116 Paris (FR)
(74) Mandataire: Schmit, Christian Norbert Marie

(56) Documents cités:
- EP-A- 0 456 914
- EP-A- 0 477 553
- EP-A- 0 520 580
- ELECTRONICS & COMMUNICATION ENGINEERING JOURNAL vol. 4, no. 4 , Aoüt 1992 , UK pages 243 - 251 T. MIGOTTI ET AL. 'Performance evalutation of broadband connections and services under varying traffic loads'
- 'Performance evalutation of broadband connections and services under varying traffic loads'

## Description

L'invention concerne un procédé de mesure de paramètres de performance d'un réseau ATM et un dispositif de mise en oeuvre du procédé.

On rappelle qu'un réseau ATM (Ansynchronous Transfer Mode) permet la transmission d'informations numériques ayant des débits variés pouvant être importants, ces débits pouvant en effet aller jusqu'à 155 Mbit/s.

La transmission suivant le standard ATM se fait par transfert de blocs d'informations de longueur constante. La quantité élémentaire d'informations transmises est de 48 octets. Le bloc transmis en ATM est dénommé cellule et est identifié par une étiquette de 5 octets appelée en-tête. La longueur totale d'une cellule est donc de 53 octets.

Aucun système ne permet aujourd'hui de mesurer les paramètres de performance d'un tel réseau et en particulier, de connaître le taux de cellules erronées, le taux de cellules insérées, le taux de cellules perdues.

On connaît toute fois du document EP-A-0 456 914 une méthode et un appareil permettant de mesurer la qualité de la transmission d'un flux de cellules d'un système de commutation de communication tel que décrit dans le préambule des revendications 1 et 7.

La présente invention a pour but de remédier à ce problème. Elle a pour objet un procédé de mesure de paramètres de performance d'un réseau ATM principalement caractérisé en ce qu'il comporte les étapes suivantes :
- générer des cellules de mesure identifiables et les insérer dans un flux incident transmis par un canal ATM,
- recevoir le flux de cellules du canal ATM,
- compter les cellules reçues,
- détecter parmi les cellules du flux, les cellules de mesure et les compter,
- comparer le contenu des cellules de mesure identifiées au contenu attendu pour détecter des erreurs de transmission,
- générer et mémoriser une information de comptage àchaque réception d'un nombre donné de cellules, cette information comportant le nombre total de cellules reçues et le nombre de cellules de mesure reçues,
- générer et mémoriser une information sur la réception à chaque fois que le contenu d'une cellule de mesure reçue ne correspond pas au contenu attendu, l'information comportant, outre le nombre total de cellules reçues et le nombre de cellules de mesure reçues, le contenu de la cellule de mesure et le nombre d'erreurs déclarées.

Selon une autre caractéristique du procédé les informations générées et mémorisées sont des données comportant quatre champs, un premier champ X1 pour le nombre total de cellules reçues à l'instant ou la donnée est mémorisée, un deuxième champ X2 pour le nombre de cellules de mesure reçues, un troisième champ X3 pour le contenu de la cellule de mesure reçue à cet instant, un quatrième champ X4 pour le nombre d'erreurs déclarées dans le contenu de la cellule de mesure, ce dernier champ étant nul chaque fois que la donnée mémorisée correspond à une information de comptage. Lors de l'enregistrement d'une information de comptage les champs X2 et X3 contiennent respectivement le numéro d'ordre de la dernière cellule de mesure reçue et le contenu de la cellule de mesure reçue à cet instant.

Selon une autre caractéristique, le procédé consiste à l'émission, à générer des cellules de mesure contenant un en-tête prédéterminé et un numéro d'ordre d'émission.

Ainsi, une information comporte dans le deuxième champ le numéro d'ordre attendu et dans le troisième champ le numéro d'ordre reçu.

Selon une autre caractéristique, le procédé consiste à la réception à identifier les cellules de mesure par comparaison de l'en-tête des cellules reçues avec l'en-tête prédéterminé préalablement enregistré et lorsqu'une cellule de mesure a été identifiée, à comparer son numéro d'ordre au numéro d'ordre attendu.

Le numéro d'ordre attendu est obtenu par incrémentation d'une unité du numéro d'ordre de la cellule de mesure précédente même si ce numéro n'est pas dans l'ordre normal d'arrivée.

Selon une autre caractéristique, le procédé consiste, lorsque le numéro d'ordre d'une cellule et le numéro attendu sont différents, à réaliser en temps réel une comparaison entre les deuxièmes et troisièmes champs pour la cellule en cours et la précédente et déclarer que la cellule est erronée ou non selon les résultats de comparaison.

L'invention concerne également un dispositif de mesure de paramètres de performance d'un réseau ATM comportant des moyens d'émission d'un flux de cellules de format et de débit correspondant aux normes de transmission du réseau et des moyens de réception du flux de cellules émises principalement caractérisé en ce que :
A) les moyens d'émission comportent :
   - des moyens de génération de cellules de mesure,
   - des moyens d'insertion de ces cellules dans le flux incident,
B) les moyens de réception comportent :
   - des moyens de comptage des cellules reçues,
   - des moyens de détection et de comptage des cellules de mesure,
   - des moyens de comparaison du contenu des cellules de mesure identifiées au contenu attendu pour détecter des erreurs de transmission,
   - des moyens de mémorisation d'une information de comptage ou de réception, les informations de réception étant fonction du nombre de cellules reçues et du nombre d'erreurs dans la cellule de mesure concernée,
   - des moyens de traitement des informations pour obtenir une datation des cellules et le taux d'erreur de transmission.

Selon une autre caractéristique, les moyens de génération de cellules de mesure comportent :
- un générateur d'en-tête permettant d'identifier les cellules de mesure,
- un générateur de champ d'information des cellules de mesure permettant de générer un numéro d'ordre,
- un multiplexeur recevant chaque en-tête généré et chaque numéro d'ordre.

Selon une autre caractéristique, le générateur d'en-tête comprend une mémoire programmable dans laquelle sont enregistrées un ou plusieurs en-têtes prédéterminés, et des moyens de commande aptes à commander la lecture dans la mémoire d'un en-tête donné pendant la durée de la mesure.

Selon une autre caractéristique, le générateur de champ d'information des cellules de mesure comporte un compteur N1 bits qui, à chaque incréméntation, permet de donner le numéro d'ordre de la cellule générée, ce numéro constituant le champ information de la cellule.

Selon une autre caractéristique, les moyens de comptage de cellules reçues comportent un compteur N2 bits, activé par une horloge cellule HC fournie par le flux reçu de cellules.

Selon une autre caractéristique, les moyens de comptage de cellules de mesure comportent un compteur N3 bits, activé par une horloge cellule de mesure HM fournie par les moyens de détection de cellules de mesure.

Selon une autre caractéristique, les moyens de comparaison comportent un registre additionneur de N1 bits et un comparateur de N1 bits.

Selon une autre caractéristique les moyens de mémorisation comportent une mémoire à double accès, dans laquelle sont mémorisées les données de comptage et de réception afin de permettre aux moyens de traitement de lire et d'écrire en même temps ces données dans la mémoire.

Selon une autre caractéristique, les moyens de traitement comportent une unité centrale apte à déterminer le taux de cellules erronées, les taux de cellules insérées, les taux de cellules perdues et de dater les cellules à partir des données mémorisées.

Selon une autre caractéristique les moyens de traitement comportent en outre des moyens de stockage des données qui ont été mémorisées en temps réel afin d'effectuer les traitements en temps différé.

D'autres particularités et avantages de l'invention apparaîtront à la lecture de la description faite ci-après, à titre indicatif et nullement limitatif en regard des dessins annexés sur lesquels :
- La figure 1, représente le schéma de principe de l'invention,
- La figure 2, représente le schéma de réalisation des moyens d'émission selon l'invention,
- La figure 3, représente le schéma de réalisation des moyens de réception et de traitement selon l'invention.

Le flux de données transmis selon le format ATM se présente sous la forme de cellules d'information numériques de longueur de 53 octets, la transmission se faisant en mode asynchrone.

Bien entendu l'invention s'applique également à toute transmission de ce type.

Les erreurs de transmission en mode ATM se traduisent par l'apparition de défauts du type : cellule erronée, cellule perdue ou insertion de cellule.

Une cellule erronée est une cellule dont le contenu reçu ne correspond pas au contenu émis.

Une cellule perdue est une cellule émise qui ne parvient pas au terminal récepteur destinataire.

Une cellule insérée est une cellule dont la destination n'était pas celle du terminal qui la reçoit.

Selon le procédé de mesure de performances, objet de l'invention, on peut obtenir après des mesures effectuées sur plusieurs heures de transmission et même sur plusieurs journées, le taux d'erreurs de transmission. On détermine en effet, selon le procédé, le nombre de cellules erronées observées durant la mesure, le nombre de cellules perdues ainsi que le nombre de cellules insérées.

Conformément au procédé on génère des cellules dites "de mesure", c'est à dire des cellules dont le contenu permet d'une part de les identifier à la réception et d'autre part de savoir l'ordre dans lequel elles ont été émises.

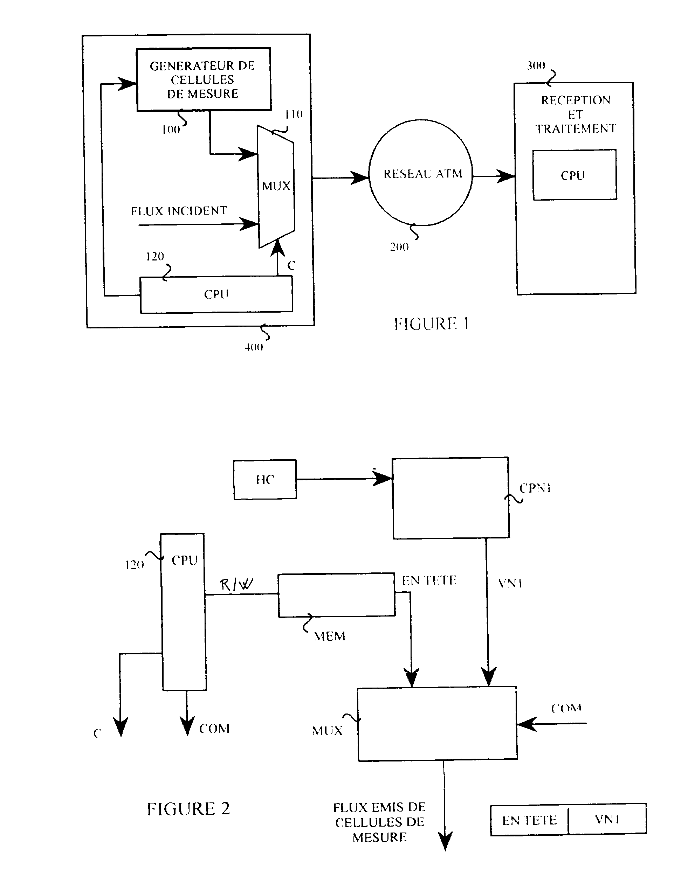

Ainsi comme on peut le voir sur la figure 1, on prévoit un générateur 100 apte à générer des cellules de mesure pour les transmettre sur un réseau ATM 200, à destination d'un terminal récepteur 300.

Avant d'être émises sur le réseau les cellules de mesure sont insérées dans un flux incident à destination du terminal récepteur, ce flux étant obtenu par un terminal émetteur 400 classique en soi pour la partie génération du flux incident. L'insertion est obtenue au moyen d'un multiplexeur 110 qui délivre un signal multiplexé au rythme désiré donné par une commande C fournie par le terminal émetteur à partir de son unité centrale de traitement 120.

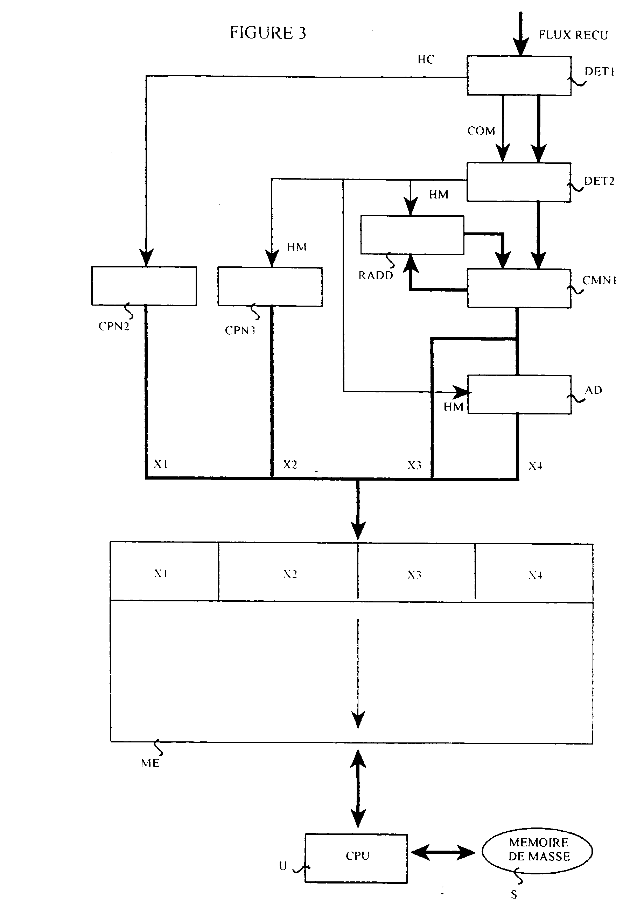

La figure 2 permet d'illustrer une réalisation pratique du générateur de cellules de mesure.

Le générateur comporte une unité de commande CPU pilotant les opérations de lecture et d'écriture R/W de données dans une mémoire MEM programmable de type RAM. Cette unité de commande génère un signal de commande COM. La mémoire contient des données de 5 octets correspondant à différents en-têtes. On choisit un en- tête pour toute la durée d'une mesure. On peut changer d'en-tête pour réaliser d'autres séries de mesures.

Le générateur comporte en outre un compteur CPN1 activé par une horloge HC. Ce compteur délivre des valeurs de comptage VN1 au rythme de l'horloge HC. Ces valeurs de comptage sont des données de N1 bits répétés (48 x 8) / N1 fois. Le rythme d'envoi est choisi par l'utilisateur qui va, à partir du clavier (non représenté) du terminal émetteur, commander la génération du signal C par l'unité de traitement.

Le signal COM, fourni par l'unité 120, permet de délimiter l'en-tête du champ information de la cellule et donc de commander la sortie d'un multiplexeur MUX pour obtenir le flux de cellules de mesure. Ce flux est formé de cellules de mesure comprenant un en-tête lu dans la mémoire MEM et un champ information contenant une valeur de comptage VN1, s'incrémentant d'une unité à chaque cellule. Ainsi les cellules générées son identifiables par leur en-tête et leur champ information contient un numéro d'ordre d'émission.

Sur la figure 3, on a représenté un exemple de réalisation des moyens de réception et de traitement permettant de mettre en oeuvre le procédé selon l'invention. Seuls ces moyens sont représentés, les autres éléments du terminal récepteurs sont classiques en eux-mêmes. Le détecteur DET1 de cellules du flux reçu permet de générer un signal COM synchrone avec l'arrivée des en-têtes de cellules. Ce signal est appliqué à un deuxième détecteur DET2 qui permet d'identifier, parmi les cellules reçues, celles qui sont des cellules de mesure.

Pour cela le deuxième détecteur DET2 compare l'en-tête des cellules reçues à l'en-tête d'identification d'une cellule de mesure. A cette fin le deuxième détecteur comporte un comparateur et un registre (non représentés). Le registre contient l'en-tête d'identification choisi à l'émission pour la mesure.

La détection des cellules de mesure par le détecteur DET2 permet d'obtenir un signal d'horloge de cellules de mesure HM. Le champ information des cellules de mesure est appliqué à un comparateur N1 bits CMN1 qui effectue une comparaison entre le champ information reçu et le champ attendu. Le champ d'information attendu est fourni par un registre additionneur RADD. Ce registre reçoit pour cela une valeur de chargement fournie par le comparateur CMN1. Cette valeur est la dernière valeur reçue par le comparateur qu'il s'agisse d'une valeur erronée ou non. La valeur attendue correspond donc à cette dernière valeur chargée dans le registre incrémenté de 1.

Le champ d'information des cellules de mesure c'est à dire les 48 octets, sont comparés aux 48 octets fournis par le registre. Lorsqu'il y a des différences, on additionne le nombre d'erreurs obtenu sur la cellule en cours pour connaître le nombre total d'erreurs de bits sur cette cellule. Le nombre obtenu par l'additionneur est piloté par l'horloge HM.

On dispose également de compteurs de cellules. En effet, un compteur CPN2 de N2 bits permet de compter le nombre de cellules reçues à partir de l'horloge HC. Un compteur CPN3 de N3 bits permet de compter le nombre de cellules de mesure reçues à partir de l'horloge HM.

On forme avec les sorties de ces compteurs CPN2, CPN3, la sortie du comparateur CMN1 et de l'additionneur AD, une donnée composée de 4 champs X1, X2, X3 et X4.

A l'instant où l'on forme cette donnée pour la mémoriser, le champ X1 comporte la valeur de comptage du compteur CPN2, c'est à dire le nombre de cellules reçues.

Le champ X2 comporte la valeur de comptage du compteur CPN3, c'est à dire le nombre de cellules de mesure reçues.

Le champ X3 comporte (Y x N1) bits de données contenues dans le champ information de la cellule de mesure reçue.

Le champ X4 comporte le nombre d'erreurs compté dans le champ information de la cellule de mesure reçue. Conformément au procédé, les données ainsi obtenues sont mémorisées en temps réel dans une mémoire ME de type RAM. De préférence cette mémoire est montée de manière à assurer un double accès et cela de façon classique, permettant ainsi des opérations de lecture et écriture simultanées afin d'effectuer des traitements en temps réel sur les données. Une mémoire de masse S peut être prévue pour stocker périodiquement ces données dans le cas où les traitements et analyses sont différées.

L'unité de traitement est apte à piloter les opérations d'écriture et de lecture des données dans la mémoire ME et/ou dans la mémoire de masse S.

Des données de comptage sont- écrites dans la mémoire ME chaque fois que le nombre de cellules reçues a atteint une valeur prédéterminée; soit en pratique 2N2. Une donnée de comptage a son champ X4 à zéro. Ces données permettent d'obtenir une base de temps et sont utilisées par l'unité de traitement pour avoir une référence de temps et ainsi dater les cellules.

Des données de réception sont écrites dans la mémoire ME chaque fois qu'une différence entre le contenu attendu d'une cellule de mesure et le contenu reçu apparaît, que cette différence soit due à une cellule erronée, à une perte de cellule ou à une insertion de cellule.

Ainsi le comparateur CMN1 compare les valeurs de N1 bits issues du champ information de la cellule de mesure reçue avec la valeur de N1 bits issue du registre additionneur RADD.

Ce registre additionneur contient la valeur de N1 bits de la cellule précédente incrémentée de 1. Cette valeur est normalement la valeur attendue.

Le résultat de chaque comparaison est transféré vers l'additionneur.

Les N1 bits du champ information de la cellule de mesure sont chargés automatiquement dans le registre RADD pour le test de la prochaine cellule reçue.

Le nombre d'erreurs dans la cellule est obtenu au bout de (48 x 8) / N1 comparaisons.

Si le nombre d'erreurs est différent de zéro, il y a écriture dans la mémoire double accès ME d'une donnée de réception :
- Valeur du compteur CPN2 de cellules sur N2 bits.
- Valeur du compteur CPN3 de cellules de mesure sur N3 bits.
- Valeur des Y dernières valeurs du numéro de N1 bits contenues dans le champ information de la cellule reçue.
- Valeur du nombre d'erreurs de la cellule courante sur N4 bits.

Cette écriture a lieu aussi en cas de dépassement du compteur CPN2, et la donnée indique l'état de la dernière cellule reçue.

La mémoire ME est une mémoire circulaire, gérée en double accès, comportant, comme cela a été dit, un registre accessible en lecture par l'unité U permettant de récupérer la valeur de l'adresse mémoire. L'unité U peut lire les données, les traiter en temps réel pour en déduire les paramètres de performance. Elle les sauvegarde après compression éventuelle dans la mémoire de masse S. Ces données peuvent alors être traitées en temps différé.

Le contenu du champ X4 donne l'état de la cellule en cours. Le numéro de la cellule reçue est obtenu grâce au champ X3. Le champ X4 indique si cette cellule est erronée. L'historique de la cellule précédente et la cellule suivante permet de décider si cette cellule est erronée, insérée ou s'il y a des cellules perdues. La datation exacte de cet événement est obtenue grâce au compteur absolu de cellules associé au champ X1.

Considérons une cellule B en cours avec les champs dénommés champ X1B, champ X2B, champ X3B et champ X4B.

Considérons la cellule précédente avec les champs dénommés champ X1A, champ X2A, champ X3A et champ X4A.

Considérons la cellule suivante avec les champs dénommés champ X1C, champ X2C, champ X3C et champ X4C.

L'état du champ X4 est connu. Si ce champ est à zéro, il n'y a aucun traitement à faire, sinon le traitement ci-après est mis en oeuvre :

Le numéro de la cellule en cours est connu grâce au champ X3B.

Le numéro de la cellule de mesure reçue précédemment est obtenu à partir du champ X2A, du champ X3A et du champ X2B par un vote majoritaire.

Le numéro de la cellule de mesure suivante est obtenu grâce au champ X2C, au champ X3C et au champ X2B.

Les champs X1A, X1B et X1C permettent de connaître la position relative des cellules dans le temps et donc de les dater.

On détermine grâce à la connaissance de l'historique du flux de cellules combien de cellules sont erronées ou insérées ou perdues. On date ces événements à la précision du temps cellule. On peut aussi connaître le nombre de cellules pendant un temps déterminé.

Le nombre de cellules erronées, insérées et perdues est obtenu modulo N1.

Le nombre d'erreurs dans le champ information de la cellule est obtenu modulo N4.

## Revendications

1. Procédé de mesure de paramètres de performance d'un réseau de transmission de type ATM, selon lequel:
- on génére des cellules de mesure identifiables et on les émet sur un canal ATM;
- on reçoit un flux de cellules du canal ATM, et on compte les cellules reçues;
- on détecte parmi les cellules du flux, les cellules de mesure et on les compte; caractérisé en ce qu'il comprend en outre les étapes suivantes:
- comparer le contenu des cellules de mesure identifiées au contenu attendu pour détecter des erreurs de transmission,
- générer et mémoriser une information de comptage à chaque réception d'un nombre donné de cellules, cette information comportant le nombre total de cellules reçues,
- générer et mémoriser une information sur la réception à chaque fois que le contenu d'une cellule de mesure reçue ne correspond pas au contenu attendu, l'information comportant outre le nombre total de cellules reçues et le nombre de cellules de mesure reçues, le contenu de la cellule de mesure et le nombre d'erreurs déclarées.

2. Procédé de mesure de paramètres de performance selon la revendication 1, caractérisé en ce que les informations sont des données comportant quatre champs, un premier champ (X1) pour le nombre total de cellules reçues à l'instant où la donnée est mémorisée, un deuxième champ (X2) pour le nombre de cellules de mesure reçues, un troisième champ (X3) pour le contenu de la cellule de mesure reçue à cet instant, un quatrième champ (X4) pour le nombre d'erreurs déclarées dans le contenu de la cellule de mesure, ce dernier champ étant nul chaque fois que la donnée mémorisée correspond à une information de comptage.

3. Procédé de mesure de paramètres de performance selon la revendication 2, caractérisé en ce qu'il consiste, à l'émission, à générer des cellules de mesure comportant un en-tête prédéterminé et un numéro d'ordre d'émission.

4. Procédé de mesure de paramètres de performance selon l'une quelconque des revendications précédentes, caractérisé en ce qu'il consiste à la réception à identifier les cellules de mesure par comparaison de l'en-tête des cellules reçues avec l'en-tête prédéterminé préalablement enregistré et lorsqu'une cellule de mesure a été identifiée à comparer son numéro d'ordre au numéro d'ordre attendu.

5. Procédé de mesure de paramètres de performance selon la revendication 4, caractérisé en ce que le numéro d'ordre attendu est obtenu par incrémentation d'une unité du numéro d'ordre de la cellule de mesure précédente.

6. Procédé de mesure de paramètre de performance selon la revendication 5, caractérisé en ce qu'il consiste à réaliser en temps réel,lorsque le numéro d'ordre d'une cellule de mesure reçue et le numéro d'ordre attendu sont différents, une comparaison des deuxièmes et troisièmes champs enregistrés pour la cellule en cours et la précédente et déclarer que la cellule en cours est erronée ou non selon les résultats de cette comparaison, ou qu'il s'agit d'une perte de cellule ou qu'il s'agit d'une insertion de cellule.

7. Dispositif de mesure de paramètres de performance d'un réseau ATM comportant des moyens d'émission d'un flux de cellules de format et de débit correspondant aux normes de transmission du réseau et des moyens de réception du flux de cellules émises, dans lequel:
A) les moyens d'émission (400 ) comprennent:
- des moyens de génération de cellules de mesure (100),
- des moyens d'insertion (110) de ces cellules dans le flux incident,
B) les moyens de réception (300) comprennent:
- des moyens de comptage (CPN2) des cellules reçues,
- des moyens de détection (DET2) et de comptage (CPN3) des cellules de mesure, caractérisé en ce qu'il comporte en outre :
- des moyens de comparaison (CMN1, RADD) du contenu des cellules de mesure identifiées au contenu attendu pour détecter des erreurs de transmission,
- des moyens de mémorisation (ME) d'une information de comptage ou de réception, les informations de réception étant fonction du nombre de cellules reçues et du nombre d'erreurs dans la cellule de mesure concernée,
- des moyens de traitement (U) des informations pour obtenir une datation des cellules et le taux d'erreur de transmission.

8. Dispositif de mesure de paramètres selon la revendication 7, caractérisé en ce que les moyens de génération de cellules de mesure (100) comportent :
- un générateur d'en-tête (MEM) d'identification des cellules de mesure,
- un générateur de champs information (CPN1) des cellules de mesure permettant de générer un numéro d'ordre,
- un multiplexeur (MUX) recevant chaque en-tête généré et chaque numéro d'ordre.

9. Dispositif de mesure de paramètres selon la revendication 8, caractérisé en ce que le générateur d'en-tête comprend une mémoire programmable (MEM) dans laquelle sont enregistrés un ou plusieurs en-têtes prédéterminés, et des moyens de commande (120) aptes à commander la lecture dans la mémoire d'un en-tête donné pendant la durée de la mesure.

10. Dispositif de mesure de paramètres selon la revendication 8, caractérisé en ce que le générateur de champ information des cellules de mesure comporte un compteur (CPN1) de N1 bits qui, à chaque incrémentation, permet de donner le numéro d'ordre de la cellule générée, ce numéro constituant le champ information de la cellule.

11. Dispositif de mesure de paramètre selon l'une quelconque des revendications 7 à 10, caractérisé en ce que les moyens de comptage de cellules reçues comportent un compteur (CPN2) de N2 bits activé par une horloge cellule HC fournie par le flux reçu de cellules.

12. Dispositif de mesure de paramètres de mesure de performances selon l'une quelconque des revendications 7 à 11, caractérisé en ce que les moyens de comptage des cellules de mesure comportent un compteur (CPN3) de N3 bits activé par une horloge cellule de mesure HM fournie par les moyens de détection de cellule de mesure.

13. Dispositif de mesure de paramètres de mesure de performance selon l'une quelconque des revendications 7 à 12, caractérisé en ce que les moyens de comparaison comportent un registre additionneur (RADD) de N1 bits et un comparateur (CMN1) de N1 bits.

14. Dispositif de mesure de paramètres de performance selon l'une quelconque des revendications 7 à 13, caractérisé en ce que les moyens de mémorisation comportent une mémoire à double accès (ME).

15. Dispositif de mesure de paramètres de performance selon l'une quelconque des revendications 7 à 14, caractérisé en ce que les moyens de traitement comportent une unité centrale de traitement (U) apte à déterminer le taux de cellules erronées, le taux de cellules perdues, le taux de cellules insérées et de dater les cellules à partir des données mémorisées.

16. Dispositif de mesure de paramètres de mesure de performance selon la revendication 15, caractérisé en ce que les moyens de traitement comportent en outre des moyens de stockage (S) des données qui ont été mémorisées en temps réel afin d'effectuer ces traitements en temps différé.

## Patentansprüche

1. Verfahren zum Messen von Leistungskennwerten eines Übertragungsnetzes vom Typ ATM, gemäß dem:
- man identifizierbare Meßzellen erzeugt und man sieh auf einem ATM Kanal aussendet;
- man einen Zellenfluß von dem Kanal ATM empfängt und man die empfangenen Zellen zählt;
- man unter den Zellen des Flusses die Meßzellen erfaßt und sie zählt; **dadurch gekennzeichnet**, daß es ferner die folgenden Schritte umfaßt:
- Vergleichen des Inhalts der identifizierten Meßzellen mit dem erwarteten Inhalt, um Übertragungsfehler zu erfassen,
- Erzeugen und Speichern einer Zählinformation bei jedem Empfang einer gegebenen Anzahl von Zellen, wobei diese Information die Gesamtzahl der empfangenen Zellen umfaßt,
- Erzeugen und Speichern einer Information über den Empfang bei jedem Mal, bei dem der Inhalt einer empfangenen Meßzelle nicht dem erwarteten Inhalt entspricht, wobei die Information ferner die Gesamtzahl der empfangenen Zellen und die Anzahl der empfangenen Meßzellen, den Inhalt der Meßzelle und die Anzahl der angegebenen Fehler umfaßt.

2. Verfahren zum Messen von Leistungskennwerten gemäß Anspruch 1, **dadurch gekennzeichnet**, daß die Informationen Daten sind, die vier Felder umfassen, ein erstes Feld (X1) für die Gesamtzahl der zu dem Zeitpunkt empfangenen Zellen, wo die Date gespeichert wird, ein zweites Feld (X2) für die Anzahl der empfangenen Meßzellen, ein drittes Feld (X3) für den Inhalt der zu diesem Zeitpunkt empfangene Meßzelle, und ein viertes Feld (X4) für die Anzahl der in dem Inhalt der Meßzelle angegebenen Fehler, wobei letzteres Feld jedes Mal null ist, wenn die gespeicherte Date einer Zählinformation entspricht.

3. Verfahren zum Messen von Leistungskennwerten gemäß Anspruch 2, **dadurch gekennzeichnet**, daß es darin besteht, beim Aussenden Meßzellen zu erzeugen, die einen vorbestimmten Vorspann und eine Ordnungsnummer der Übertragung umfassen.

4. Verfahren zum Messen von Leistungskennwerten nach irgendeinem der vorhergehenden Ansprüche, **dadurch gekennzeichnet** , daß es darin besteht, beim Empfang die Meßzellen durch Vergleich des Vorspanns der empfangenen Zellen mit dem vorbestimmten, vorausgehend aufgezeichneten Vorspann zu identifizieren, und, wenn eine Meßzelle identifiziert worden ist, ihre Ordnungsnummer mit der erwarteten Ordnungsnummer zu vergleichen.

5. Verfahren zum Messen von Leistungskennwerten gemäß Anspruch 4, **dadurch gekennzeichnet**, daß die erwartete Ordnungsnummer durch Erhöhen der Ordnungsnummer der vorausgehenden Meßzelle um eine Einheit empfangen wird.

6. Verfahren zum Messen von Leistungskennwerten gemäß Anspruch 5, **dadurch gekennzeichnet**, daß es darin besteht, in Realzeit, wenn die Ordnungsnummer einer empfangenen Meßzelle und die erwartete Ordnungsnummer unterschiedlich sind, einen Vergleich der zweiten und dritten, aufgezeichneten Felder für die gegenwärtige Zelle und die vorhergehende auszuführen und anzugeben, daß gemäß den Ergebnissen dieses Vergleichs die gegenwärtige Zelle fehlerhaft ist oder nicht, oder daß es sich um einen Zellenverlust handelt oder daß es sich um eine Zelleneinfügung handelt.

7. Vorrichtung zum Messen von Leistungskennwerten eines ATM Netzes, die eine Einrichtung zum Aussenden eines Zellenflusses mit einem Format und einer Rate, die den Übertragungsnormen des Netzes entspricht, und eine Empfangseinrichtung für den Fluß der ausgesendeten Zellen umfaßt, in der:
A) die Sendeeinrichtung (400) umfaßt:
- Mittel zum Erzeugen von Meßzellen (100),
- Mittel zum Einfügen (110) dieser Zellen in den einlaufenden Fluß,
B) die Empfangseinrichtung (300) umfaßt:
- Mittel (CPN2) der empfangenen Zellen,
- Mittel zum Erfassen (DET2) und Zählen (CPN3) von Meßzellen, **dadurch gekennzeichnet**, daß sie ferner umfaßt:
- Vergleichseinrichtungen (CMN1, RADD) für den Inhalt der identifizierten Meßzellen mit dem erwarteten Inhalt, um Übertragungsfehler zu erfassen,
- Einrichtungen zum Speichern (ME) einer Zähl- oder Empfangsinformation, wobei die Empfangsinformationen eine Funktion der Anzahl der empfangenen Zellen und der Anzahl von Fehlern in der betreffenden Meßzelle ist,
- Mittel zum Verarbeiten (U) der Informationen, um eine Zeitbestimmung der Zellen und die Fehlerhäufigkeit der Übertragung zu erhalten.

8. Vorrichtung zum Messen von Leistungskennwerten, gemäß Anspruch 7, **dadurch gekennzeichnet**, daß die Mittel zum Erzeugen von Meßzellen (100) umfassen:
- eine Erzeugungseinrichtung für einen Vorspann (MEM) zum Identifizierung von Meßzellen, eine Erzeugungseinrichtung für die Informationsfelder (CPN1) der Meßzellen, die erlaubt, eine Ordnungszahl zu erzeugen,
- einen Multiplexer (MUX), der jeden erzeugten Vorspann und jede Ordnungsnummer erhält.

9. Vorrichtung zum Messen von Leistungskennwerten, gemäß Anspruch 8, **dadurch gekennzeichnet**, daß die Erzeugungseinrichtung für den Vorspann einen programmierbaren Speicher (MEM), in dem ein oder mehrere vorbestimmte Vorspänne gespeichert sind, und Steuerungseinrichtungen (120) umfaßt, die das Lesen eines gegebenen Vorspanns während der Meßdauer in den Speicher befehlen können.

10. Vorrichtung zum Messen von Leistungskennwerten, gemäß Anspruch 8, **dadurch gekennzeichnet**, daß die Erzeugungseinrichtung für ein Informationsfeld der Meßzellen einen Zähler (CPN1) von N1 Bit umfaßt, der bei jeder Erhöhung die Ordnungszahl der erzeugten Zelle geben kann, wobei diese Zahl die Feldinformation der Zelle bildet.

11. Vorrichtung zum Messen von Leistungskennwerten, nach irgendeinem der Ansprüche 7 bis 10, **dadurch gekennzeichnet** , daß die Zähleinrichtung für empfangene Zellen einen Zähler (CPN2) von N2 Bit umfaßt, der durch eine Taktzelle HC aktiviert wird, die von dem empfangenen Fluß von Zellen geliefert wird.

12. Vorrichtung zum Messen von Leistungskennwerten, nach irgendeinem der Ansprüche 7 bis 11, dadurch gekennzeichnet, daß die Zähleinrichtung für Meßzellen einen Zähler (CPN3) von N3 Bit umfaßt, der durch eine Taktmeßzelle HM aktiviert wird, die von den Mitteln zum Erfassen der Meßzellen geliefert wird.

13. Vorrichtung zum Messen von Leistungskennwerten, nach irgendeinem der Ansprüche 7 bis 12, **dadurch gekennzeichnet** , daß die Vergleichenseinrichtungen ein Additionsregister (RADD) von N1 Bit und einen Zähler (CMN1) von N1 Bit umfassen.

14. Vorrichtung zum Messen von Leistungskennwerten, nach irgendeinem der Ansprüche 7 bis 13, **dadurch gekennzeichnet** , daß die Einrichtungen zum Speichern einen Speicher mit doppeltem Zugriff (ME) umfassen.

15. Vorrichtung zum Messen von Leistungskennwerten, nach irgendeinem der Ansprüche 7 bis 14, **dadurch gekennzeichnet** , daß die Mittel zum Verarbeiten eine zentrale Verarbeitungseinheit (U) umfassen, die die Häufigkeit der fehlerhaften Zellen, die Häufigkeit der verlorenen Zellen, die Häufigkeit der eingefügten Zellen bestimmen und die Zellen ausgehend von den gespeicherten Daten datieren kann.

16. Vorrichtung zum Messen von Leistungskennwerten, gemäß Anspruch 15, **dadurch gekennzeichnet**, daß die Mittel zum Verarbeiten ferner Speichereinrichtungen (S) für Daten umfassen, die in Realzeit gespeichert worden sind, um diese Verarbeitungen zu einer verschobenen Zeit auszuführen.

## Claims

1. Method for measuring performance parameters of an ATM type transmission network, according to which:
- identifiable measuring cells are generated and sent over an ATM channel;
- a flow of cells from the ATM channel is received and the cells received are counted;
- among the cells of the flow, the measuring cells are detected and counted; characterized in that it also comprises the following steps:
- comparing the content of the identified measuring cells with the anticipated content so as to detect any transmission errors,
- generating and storing an item of counting information each time a given number of cells is received, this item of information including the total number of cells received,
- generating and storing an item of information when received each time the content of a measuring cell received does not correspond to the anticipated content, the information including, in addition to the total number of cells received and the number of measuring cells received, the content of the measuring cell and the number of declared errors.

2. Method for measuring performance parameters according to Claim 1, characterized in that the information is data having four fields, a first field (X1) for the total number of cells received at the moment that the data item is stored, a second field (X2) for the number of measuring cells received, a third field (X3) for the content of the measuring cell received at this moment and a fourth field (X4) for the number of declared errors in the content of the measuring cell, this last field being null each time the stored data item corresponds to an item of counting information.

3. Method for measuring performance parameters according to Claim 2, characterized in that, at the time of transmission, it involves generating measuring cells having a predetermined header and a transmission serial number.

4. Method for measuring performance parameters according to any one of the preceding claims, characterized in that, at the time of reception, it involves identifying the measuring cells by comparing the header of the cells received with the predetermined header previously recorded and comparing its serial number with the anticipated serial number.

5. Method for measuring performance parameters according to Claim 4, characterized in that the anticipated serial number is obtained by incrementing the serial number of the preceding measuring cell by one unit.

6. Method for measuring performance parameters according to Claim 5, characterized in that it involves comparing in real time, when the serial number of a measuring cell received and the anticipated serial number are different, the second and third recorded fields for the current cell and the preceding one, and declaring that the current cell is erroneous or not, according to the results of this comparison, or that there is a loss of a cell or an insertion of a cell.

7. Device for measuring performance parameters of an ATM network including means for sending a flow of cells with a format and rate corresponding to the transmission standards for the network and means for receiving the flow of cells sent, in which:
A) the transmission means (400) comprise:
- means for generating measuring cells (100),
- means for inserting (110) these cells in the incident flow,
B) the reception means (300) comprise:
- means for counting (CPN2) the cells received,
- means for detecting (DET2) and counting (CPN3) the measuring cells, characterized in that it also includes:
- means for comparing (CMN1, RADD) the content of the identified measuring cells with the anticipated content in order to detect any transmission errors,
- means for storing (ME) an item of counting or receiving information, the receiving information being dependent on the number of cells received and the number of errors in the measuring cell in question,
- means for processing (U) information to obtain a dating of the cells and the transmission error rate.

8. Device for measuring parameters according to Claim 7, characterized in that the means for generating measuring cells (100) include:
- a header generator (MEM) for identifying measuring cells,
- an information field generator (CPN1) for the measuring cells enabling a serial number to be generated,
- a multiplexer (MUX) receiving each generated header and each serial number.

9. Device for measuring parameters according to Claim 8, characterized in that the header generator comprises a programmable memory (MEM) in which one or more predetermined headers are recorded, and control means (120) suitable for controlling the reading in the memory of a header given during the measuring period.

10. Device for measuring parameters according to Claim 8, characterized in that the information field generator for the measuring cells includes an N1 bit counter (CPN1) which, with each incrementation, enables the serial number of the generated cell to be given, this number constituting the information field of the cell.

11. Device for measuring parameters according to any one of Claims 7 to 10, characterized in that the means for counting received cells include an N2 bit counter (CPN2) activated by a cell clock HC supplied by the received flow of cells.

12. Device for measuring performance measuring parameters according to any one of Claims 7 to 11, characterized in that the means for counting the measuring cells include a N3 bit counter (CPN3) activated by a measuring cell clock HM supplied by the means for detecting measuring cells.

13. Device for measuring performance measuring parameters according to any one of Claims 7 to 12, characterized in that the comparison means include an N1 bit adding register (RADD) and an N1 bit comparator (CMNl).

14. Device for measuring performance parameters according to any one of claims 7 to 13, characterized in that the storage means include a dual-port memory (ME).

15. Device for measuring performance parameters according to any one of Claims 7 to 14, characterized in that the processing means include a central processing unit (U) suitable for determining the percentage of erroneous cells, the percentage of lost cells, the percentage of inserted cells and dating the cells from the stored data.

16. Device for measuring performance measuring parameters according to Claim 15, characterized in that the processing means also include means for storing (S) data which have been stored in real time so as to carry out this processing in nonreal time.
